# EUROPEAN PATENT APPLICATION

(11) **EP 3 151 042 A1**
(43) Date of publication of application: **05.04.2017**
(21) Application number: 15798834.6
(22) Date of filing: 25.05.2015
(51) Int. Cl.: G02B 5/18, B42D 25/23, B42D 25/24, B42D 25/29, B42D 25/30, B42D 25/328

(54) **COUNTERFEIT PREVENTING STRUCTURE AND COUNTERFEIT PREVENTING ARTICLE**

(30) Priority: 26.05.2014 JP 2014108221
(71) Applicant: Toppan Printing Co., Ltd., Tokyo 110-0016 (JP)
(72) Inventor: YASHIKI, Kazuhiro, Tokyo 110-0016 (JP)
(74) Representative: Hoffmann Eitle
(86) International application number: PCT/JP2015/002628
(87) International publication number: WO 2015/182108

(57) **Abstract**

The objective of the present invention is to provide a counterfeit preventing structure which has an effect that can be confirmed by observation with the naked eye and has different optical effects on the front and back. This counterfeit preventing structure includes a micro-protrusion/depression reflective surface having a first surface that has micro-protrusions and micro-depressions and a second surface that has micro-protrusions and micro-depressions opposite to the first surface, a first color-adjusting layer that is provided on at least partial region (s) of the first surface and in contact with the first surface, and a second color-adjusting layer that is provided on at least partial region(s) of the second surface and in contact with the second surface, the first surface and second surface having micro-protrusion/depression surfaces that generate structural color by reflecting, interfering with, diffracting, scattering, and/or absorbing light from at least a portion of the visible region, wherein the difference between the refractive index of the first color-adjusting layer and the refractive index of the second color-adjusting layer is 0.1 or more. This counterfeit preventing structure makes it possible to obtain optical effects that are different under observation from a first color-adjusting layer side and a second color-adjusting layer side.

## Description

### Technical Field

The present invention relates to counterfeit preventing structures and counterfeit preventing articles, which have special optical effects.

### Background Art

It is known to prevent from counterfeiting articles which prevention of counterfeiting is required, such as securities, certificates, and articles of upscale labels, by adhering an element having difficult-to-copy optical effects. Holograms, diffraction gratings, and multilayer interference films are known as the elements having such optical effects. Unauthorized reproduction can be prevented, since these elements are difficult to be analyzed due to their micro structures or complicated layer constructions.

Further, it is known to form a reflective layer in the above-described holograms and the like is known for enhancing the optical effects. More difficult-to-copy holographic optical elements can be obtained by patterning this reflective layer. For example, the holographic element having the patterned reflective layer is adopted in bank notes of various states/countries, as the counterfeit preventing optical element.

The reflective layer can be patterned by a so-called etching technique. Japanese Patent Laid-open No. 2003-255115 discloses formation of a patterned mask by a printing method and the like onto parts of the reflective layer to be removed, followed by corrosive treatment of the reflective layer (hereinafter, referred to as "demetallizing") (see PTL1). However, counterfeit preventing effect of such articles has been decreased, since similar effect can be achieved by providing a patterned metal foil.

In regard to this problem, Japanese Patent Laid-open No. 2012-063738 proposes an optical element having a reflective layer which is totally registered to the diffraction structure of a hologram, and has a high definition of 4000 dpi or more (see PTL2) . This optical element is considered to be difficult to copy, due to higher complexity and higher definition. However, the pattern of high definition which is difficult to copy can be detected only by observation under a magnifying glass. It is difficult to confirm the effect of the pattern by observation by the naked eye.

On the other hand, recently in the field of bank notes, polymer bank notes involving a transparent polymeric substrate is put to practical use. Therefore, observation of counterfeit preventing optical element (a hologram, for example) from two sides becomes an important genuineness judging method. In view of the background described above, counterfeit preventing optical elements exhibiting different optical effects on front and back sides receive attention and are required.

### Citation List

### Patent Literature

PTL1: Japanese Patent Laid-Open No. 2003-255115
PTL2: Japanese Patent Laid-Open No. 2012-063738
PTL3: International Patent Publication No. WO2010/147185
PTL4: Japanese Patent Laid-Open No. H02-037301(1990)
PTL5: Japanese Patent Laid-Open No. 2007-329007
PTL6: Japanese Patent Laid-Open No. H01-291926(1989)

### Summary of Invention

### Technical Problem

The purpose of the present invention is to provide a counterfeit preventing structure having different optical effects on front and back sides wherein the effects can be confirmed under observation with the naked eye.

### Solution to Problem

The counterfeit preventing structure of the present invention includes a micro-protrusion/depression reflective layer causing structural color when irradiated with white light. Different structural color can be generated dependent on the medium covering the protrusion/depression structure, even when the structure has the same shape.

The counterfeit preventing structure of the first embodiment of the present invention comprises: a micro-protrusion/depression reflective layer having a first surface having micro-protrusions and micro-depressions and a second surface opposite to the first surface and having micro-protrusions and micro-depressions; a first color-adjusting layer provided on at least a part of the first surface and in contact with the first surface; and a second color-adjusting layer provided on at least a part of the second surface and in contact with the second surface, wherein: the first color-adjusting layer has a refractive index different from a refractive index of the second color-adjusting layer; the first and second surfaces of the micro-protrusion/depression reflective layer have micro-protrusion/depression surfaces causing structural colors by reflecting, interfering, diffracting, scattering and/or absorbing light of at least a portion of visible region; optical effects obtained under observation from the side of the first color-adjusting layer are different from optical effects obtained under observation from the side of the second color-adjusting layer; and the difference between refractive indices of the first and second color-adjusting layers are 0.1 or more. Here, the micro-protrusion/depression reflective layer may have the same protrusion/depression shape on the first and second surfaces. The micro-protrusion/depression reflective layer may have a protrusion/depression shape which is rectangular in the vertical cross-section, or alternatively, a protrusion/depression shape in which a horizontal cross-sectional area varies monotonously from the top to the bottom. Here, the micro-protrusion/depression reflective layer may be provided at the part of the counterfeit preventing structure, and the counterfeit preventing structure further may comprise a protective layer covering the micro-protrusion/depression reflective layer and having the same shape as the shape of the micro-protrusion/depression reflective layer. It is preferable that the difference between refractive indices of the first and second color-adjusting layers is 0.2 or more. Further, wherein the micro-protrusion/depression reflective layer may consist of a plurality of parts having different micro-protrusions and micro-depressions. Here, the second color-adjusting layer may consist of a plurality of parts having different refractive indices, and at least one of the parts of the second color-adjusting layer may have a refractive index different from the refractive index of the first color-adjusting layer.

The counterfeit preventing article of the second embodiment of the present invention comprises an article including a transparent part and the counterfeit preventing structure according to the first embodiment disposed on the transparent part of the article. The article may comprise: a personal authentication medium such as a card, a passport, and a mobile phone; securities such as a bill and a bank note; or a counterfeit preventing medium for brand protection.

### Advantageous Effects of Invention

By adopting the above-described construction, it becomes possible to provide a counterfeit preventing structure having different optical effects on front and back sides wherein the effects can be confirmed under observation with the naked eye.

### Brief Description of Drawings

[Fig. 1] Fig. 1 is a vertical cross-sectional diagram showing a configuration example of the counterfeit preventing structure according to the present invention;
[Fig. 2] Fig. 2 is a vertical cross-sectional diagram showing a configuration example of the counterfeit preventing structure according to the present invention;
[Fig. 3] Fig. 3 is a vertical cross-sectional diagram showing a configuration example of the counterfeit preventing structure according to the present invention;
[Fig. 4A] Fig. 4A is a top-view showing a configuration example of the micro-protrusion/depression reflective layer having a constitution that protrusions are aligned in a square lattice;
[Fig. 4B] Fig. 4B is a top-view showing a configuration example of the micro-protrusion/depression reflective layer having a constitution that protrusions are aligned in a hexagonal closest packed lattice;
[Fig. 5] Fig. 5 is a vertical cross-sectional diagram showing a configuration example of the counterfeit preventing structure according to the present invention;
[Fig. 6] Fig. 6 is a vertical cross-sectional diagram showing a configuration example of the counterfeit preventing structure according to the present invention;
[Fig. 7A] Fig. 7A is a vertical cross-sectional diagram showing one step of the method for manufacturing the counterfeit preventing structure according to the present invention;
[Fig. 7B] Fig. 7B is a vertical cross-sectional diagram showing one step of the method for manufacturing the counterfeit preventing structure according to the present invention;
[Fig. 7C] Fig. 7C is a vertical cross-sectional diagram showing one step of the method for manufacturing the counterfeit preventing structure according to the present invention;
[Fig. 7D] Fig. 7D is a vertical cross-sectional diagram showing one step of the method for manufacturing the counterfeit preventing structure according to the present invention; and
[Fig. 7E] Fig. 7E is a vertical cross-sectional diagram showing one step of the method for manufacturing the counterfeit preventing structure according to the present invention.

### Description of Embodiments

The counterfeit preventing structure of the present invention comprises: a micro-protrusion/depression reflective layer having a first surface having micro-protrusions and micro-depressions and a second surface opposite to the first surface and having micro-protrusions and micro-depressions; a first color-adjusting layer provided on at least a part of the first surface and in contact with the first surface; and a second color-adjusting layer provided on at least a part of the second surface and in contact with the second surface, wherein: the first and second surfaces of the micro-protrusion/depression reflective layer have micro-protrusion/depression surfaces causing a structural color by reflecting, interfering, diffracting, scattering and/or absorbing light of at least a portion of visible region; the first color-adjusting layer has a refractive index different from a refractive index of the second color-adjusting layer; optical effects obtained under observation from the side of the first color-adjusting layer are different from optical effects obtained under observation from the side of the second color-adjusting layer; and the difference between refractive indices of the first and second color-adjusting layers are 0.1 or more.

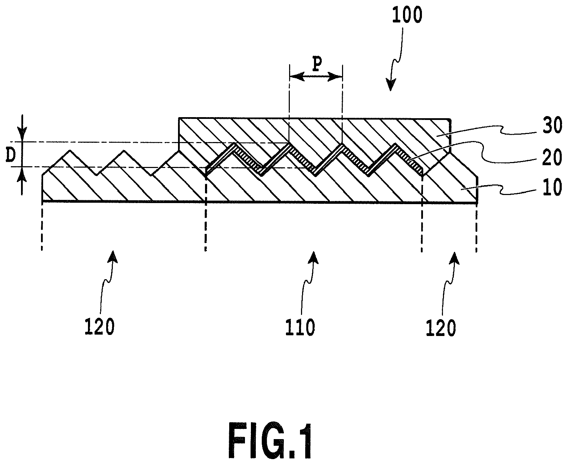

Fig. 1 shows a configuration example of the counterfeit preventing structure comprising micro-protrusion/depression reflective layer 20, first color-adjusting layer 10 covering the whole of the first surface of the micro-protrusion/depression reflective layer 20 and extending to the periphery of the micro-protrusion/depression reflective layer 20, and second color-adjusting layer 30 covering the whole of the second surface of the micro-protrusion/depression reflective layer 20 and extending to the periphery of the micro-protrusion/depression reflective layer 20, wherein the first color-adjusting layer 10 is in contact with the second color-adjusting layer in the periphery of the micro-protrusion/depression reflective layer 20.

When the counterfeit preventing structure is observed, the structural color varies dependent on micro-protrusions and micro-depressions in the micro-protrusion/depression reflective layer 20, and refractive indices of the first color-adjusting layer 10 and the second color-adjusting layer 30. The "structural color" in the present invention means a color generated by reflected light, interfered light, diffracted light and/or scattered light obtained by the micro-protrusion/depression reflective layer, or a color generated by absorption of light by the micro-protrusion/depression reflective layer 20.

If the ratio of the area of the top of protrusions in the micro-protrusion/depression reflective layer 20 to the area of the bottom of the protrusions ([area of the top of protrusions]/[area of the bottom of protrusions]) is less than 1.0, the observing surface of the micro-protrusion/depression reflective layer 20 can be interpreted as a gradient structure in which a refractive index gradually varies in the depth direction. Such protrusion/depression shape has a horizontal cross-sectional area which monotonously varies from the top to the bottom. Specifically, such protrusion/depression shape comprises protrusions having a horizontal cross-sectional area which monotonously increases from the top to the bottom, and depressions having a horizontal cross-sectional area which monotonously decreases from the top to the bottom. More specifically, such protrusion/depression shape includes shapes such as a circular cone, a pyramid, a truncated cone, a truncated pyramid, a hemisphere, a hemi-ellipsoid, a half circular cylinder (a circular cylinder with a semicircular vertical cross-section), a triangular cylinder (a triangular cylinder with a triangular vertical cross-section), spheroids of sine curves or hyperbolas, and the like. In the present specification, the "horizontal cross-section" means a cross-section parallel to a principal plane of the counterfeit preventing structure, and the "vertical cross-section" means a cross-section perpendicular to a principal plane of the counterfeit preventing structure. Here, the "vertical cross-section" may be referred simply to as "cross-section".

The gradient structure absorbs electromagnetic waves. The wavelength of the electromagnetic wave to be absorbed varies dependent on the "depth/period ratio (D/P ratio)" of the protrusions in the micro-protrusion/depression reflective layer 20, and the refractive index of the material existing in the gaps between the protrusions (air, the first color-adjusting layer 10, or the second color-adjusting layer 30). Then, electromagnetic waves having wavelengths which is not absorbed by the gradient structure are reflected or scattered. The structural color is observed in the case where the electromagnetic wave to be absorbed is visible light. In the present invention, the "depth D" of the protrusions means a distance from the top of the protrusions to the bottom part in a direction perpendicular to the principal plane of the counterfeit preventing structure, as shown in Fig. 1. On the other hand, the "period P" of the protrusions mans a distance between the tops of two adjacent protrusions in a direction parallel to the principal plane of the counterfeit preventing structure, as shown in Fig. 1. Further, in regard to the depressions, the "depth D" means a distance from the top surface to the bottom apex of the depressions in a direction perpendicular to the principal plane of the counterfeit preventing structure, and the "period P" means a distance between the bottom apices of two adjacent depressions in a direction parallel to the principal plane of the counterfeit preventing structure.

The electromagnetic wave is absorbed in a broader range of wavelength, as increase of the D/P ratio of the protrusion. If the D/P ratio is 0.5 or more, a black structural color is observed, since the whole light in visible region is absorbed. It is desirable that the D/P ratio is in a range from 0.01 to 0.5 for obtaining a chromatic structural color, although the range depends on the shapes of the protrusions and the like. Further, the D/P ratio in the above-described range is preferable to prevent from diminishing or changing the structural color caused by deformation due to external factors (heat, pressure, or the like).

On the other hand, if the protrusions in the micro-protrusion/depression reflective layer 20 has a shape in which the horizontal cross-sectional area does not vary from the top to the bottom, it is possible to generate a structural color by interference. In this case, it is possible to observe the structural color corresponding to the wavelength of light emphasized by interference between light reflected from the top surface of the protrusions in the micro-protrusion/depression reflective layer 20 and light reflected from the bottom part which is different from the protrusions. Also in this case, the structural color varies dependent on the refractive index of the material existing in the gaps between the protrusions (air, the first color-adjusting layer 10, or the second color-adjusting layer 30). In addition, the refractive index of the first color-adjusting layer 10 is different from the refractive index of the second color-adjusting layer 20, and therefore, optical path lengths in the respective layers are different from each other. Therefore, the wavelength of interfered light observed in the side of the first color-adjusting layer 10 is different from the wavelength of interfered light observed in the side of the second color-adjusting layer 30, even if the shapes of the protrusions and depressions on the front side of the micro-protrusion/depression reflective layer 20 are the same as the shapes on the back side. In other words, differently colored indications can be obtained by observation from the front and back sides. The shape in which the horizontal cross-sectional area does not vary is a shape having a rectangular vertical cross-section, and includes a prism (a prism with a polygonal horizontal cross-section), a circular cylinder (a circular cylinder with a circular horizontal cross-section), an elliptical cylinder (an elliptical cylinder with an elliptical horizontal cross-section), and the like.

Further, a structural color due to diffracted light can be generated by forming a sub-wavelength structure in which the protrusions in the micro-protrusion/depression reflective layer aligned in the constant period less than the wavelength of visible light. The sub-wavelength structure can provide primary diffracted light in a broad viewing angle. This makes it possible to improve visibility. Also in the sub-wavelength structure, the structural color varies dependent on the refractive index of the material existing in the gaps between the protrusions (air, the first color-adjusting layer 10, or the second color-adjusting layer 30).

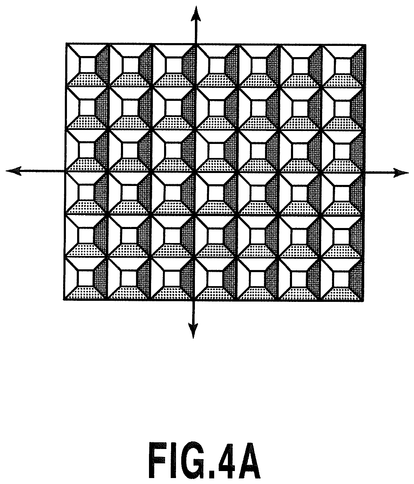

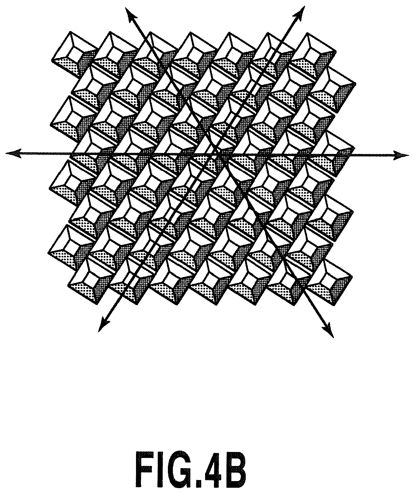

The two-dimensional alignment of the micro-protrusion/depression pattern in the micro-protrusion/depression reflective layer 20 may be a square lattice shown in Fig. 4A, or in a hexagonal closest packed lattice as shown in Fig. 4B, when diffracted light is utilized. The square lattice shown in Fig. 4A is a structure obtained with a plurality of first grooves extending one direction, and a plurality of second grooves extending the direction perpendicular to the direction in which the first grooves extend. In the square lattice, one of the protrusions or depressions is adjacent to four of the protrusions or depressions. The hexagonal closest packed shown in Fig. 4B is a structure in which one of the protrusions or depressions is adjacent to six of the protrusions or depressions. Besides, the protrusions and depressions may have other shape, although the protrusions having a shape of a quadrangular pyramid are exemplarily shown in Figs. 4A and 4B. In contrast to a structure consisting of a plurality of grooves extending in one direction (corrugated sheet structure), the structures shown in Figs. 4A and 4B can provide constant diffracted light under observation from every arbitrary direction due to two-dimensional isotropy, and thereby excellent visibility can be obtained. In addition, the diffraction indices of the first color-adjusting layer 10 and second color-adjusting layer 30 are different from each other, and thereby the optical path lengths in these layers are different from each other, in the counterfeit preventing structure of the present invention. Therefore, even if the micro-protrusion/depression reflective layer 20 has protrusions and depressions of the same shape on the front and back sides, the emitting angle of the diffracted light observed on the side of the first color-adjusting layer 10 is different from the emitting angle of the diffracted light observed on the side of the first color-adjusting layer 30. In other words, it is possible to emit diffracted light in different angles, under observation from the front and back sides.

When chromatic optical effects are obtained by "absorption at arbitrary wavelength" or "interference at arbitrary wavelength" due to a certain structure, diffracted light caused by a periodic structure of protrusions and depressions decreases the chromatic optical effects. This is because the diffracted light exhibits variation in rainbow colors dependent on observation angles. In this case, the diffracted light may be suppressed by randomizing the period of the micro-protrusion/depression pattern of the micro-protrusion/depression reflective layer 20. The "random period" means a period having variation of about 10% to about 50% in comparison of an average period. It is preferable to distribute the variation itself evenly (in other word, randomly) throughout the surface of the micro-protrusion/depression reflective layer 20. Alternatively, decrease in the chromatic optical effect caused by the periodic structure of protrusions and depressions can be avoided by setting the period of the micro-protrusion/depression pattern to make it difficult to observe diffracted light in visible region, such as a sub-wavelength period.

Further, a structural color caused by scattered light can be generated from a scattering structure in which the structure of protrusions and depressions in the micro-protrusion/depression reflective layer 20 is more miniaturized. Mechanisms causing scattering by the structure includes Rayleigh scattering, Mie scattering, and diffraction scattering, for example. Also in the scattering structure, scattering wavelength, scattering angle, and scattering distribution varies due to difference in the refractive indices of the first color-adjusting layer 10 in contact with the first surface of the micro-protrusion/depression reflective layer 20 and the second color-adjusting layer 30 in contact with the second surface of the micro-protrusion/depression reflective layer 20.

In every case in which any one of the above-described mechanisms (absorption, interference, diffraction and scattering), the wavelength range and intensity of the structural color caused by the counterfeit preventing structure of the present invention may vary dependent on an incident angle of a light source to the principal plane of the counterfeit preventing structure and an observation angle of an observer. Besides, the protrusions in the micro-protrusion/depression reflective layer 20 are explained above, for an exemplary purpose. However, this is also the case for the depressions in the micro-protrusion/depression reflective layer 20. Besides, in the present specification, the protrusions and the depressions may be collectively referred to as "protrusion/depression shape", "micro-protrusions and micro-depressions", or "micro-protrusion/depression pattern".

When counterfeit preventing structure 100 shown in Fig. 1 is observed from the side of the first surface, light of the first color is observed in region 110 in which the first color-adjusting layer 10, the micro-protrusion/depression reflective layer 20, and the second color-adjusting layer 30 are stacked, the first color being determined by the micro-protrusion/depression pattern of the micro-protrusion/depression reflective layer 20 and the refractive index of the first color-adjusting layer 10. On the other hand, if the difference in refractive indices between the first color-adjusting layer 10 and the second color-adjusting layer 30 is small in comparison with the difference in refractive indices between the micro-protrusion/depression reflective layer 20 and the first color-adjusting layer 10 or the second color-adjusting layer 30, smaller reflectance and small chromatic effects are obtained at the interface between the first color-adjusting layer 10 and the second color-adjusting layer 30 in region 120 where the micro-protrusion/depression reflective layer 20 does not exist. Alternatively, it is possible to design to render the region 120 transparent. Besides, when the counterfeit preventing structure 100 is observed from the side of the second surface, light of the second color, determined by the micro-protrusion/depression pattern of the micro-protrusion/depression reflective layer 20 and the refractive index of the second color-adjusting layer 30, is observed in region 110. On the other hand, the region 120 exhibits the small degree of chromatic effects or is observed as a transparent region, similarly to the above description. Here, the first and second colors are different from each other, due to difference in refractive indices of the first color-adjusting layer 10 and the second color-adjusting layer 30. Therefore, the counterfeit preventing structure 100 provides images with different colors under observation from the front and back sides.

In the micro-protrusion/depression reflective layer 20, the protrusion/depression shape of the first surface may be the same as the protrusion/depression shape of the second surface. It is possible to make the protrusion/depression shapes of the first and second surfaces identical by adopting a so-called corrugated structure, if the shape of the protrusions or the depressions is triangular prism (triangular prism with a triangular vertical cross-section). In the case where the protrusions and depressions having other shapes, it is possible to make the protrusion/depression shapes of the first and second surfaces identical by providing protrusions at the "white" squares of so-called "checkerboard pattern" and depressions having a corresponding shape to that of the protrusions at the "black" squares. Alternatively, it is possible to make the protrusion/depression shapes of the first and second surfaces identical by alternately aligning rows consisting of a plurality of protrusions and extending in one direction and rows consisting of a plurality of depressions having a corresponding shape to that of the protrusions and extending in the same direction. Besides, the micro-protrusion/depression reflective layer 20 may have a uniform thickness entirely.

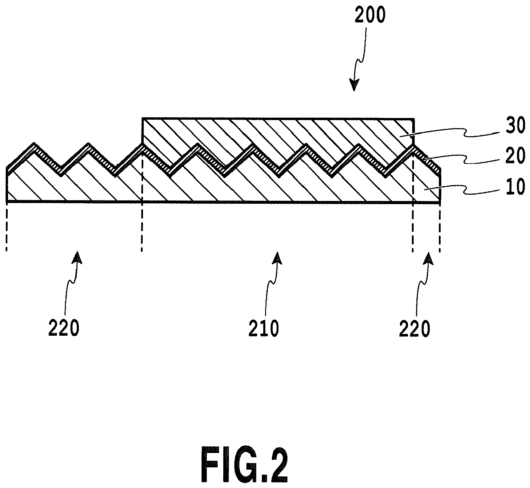

Fig. 2 shows a counterfeit preventing structure 200 having a different constitution, which is similar to the constitution shown in Fig. 1 except that the micro-protrusion/depression reflective layer 20 is provided on the whole surface of the first color-adjusting layer 10.

When counterfeit preventing structure 200 shown in Fig. 2 is observed from the side of the first surface, light of the first color is observed in both of: region 210 in which the first color-adjusting layer 10, the micro-protrusion/depression reflective layer 20, and the second color-adjusting layer 30 are stacked; and region 220 where the second color-adjusting layer 30 does not exist. In other words, the counterfeit preventing structure 200 is observed as a body having a uniform color throughout the whole surface, under observation from the side of the first surface. Besides, when the counterfeit preventing structure 200 is observed from the side of the second surface, light of the second color, determined by the micro-protrusion/depression pattern of the micro-protrusion/depression reflective layer 20 and the refractive index of the second color-adjusting layer 30, is observed in region 210. Further, light of third color, determined by the micro-protrusion/depression pattern of the micro-protrusion/depression reflective layer 20 and the refractive index of air, is observed in region 220. Here, the first to third colors are different from each other, due to difference in refractive indices of the first color-adjusting layer 10, the second color-adjusting layer 30 and air. Therefore, the counterfeit preventing structure 200 provides images, both of shapes and colors of which are different from each other, under observation from the side of the first surface and observation from the side of the second surface.

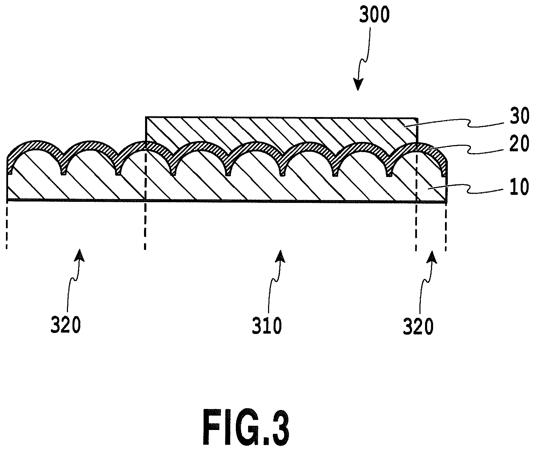

Fig. 3 shows a counterfeit preventing structure 300 having a different constitution, which is similar to the constitution shown in Fig. 2 except that the micro-protrusion/depression reflective layer 20 has hemispherical protrusions convex to the second surface. The counterfeit preventing structure shown in Fig. 3 can be obtained by forming the first color-adjusting layer by a method utilizing a monolayer particle film as set forth below.

The structural color under observation from the side of the first surface is different from the structural color under observation from the side of the second surface, even if the refractive indices of the first color-adjusting layer 10 is the same as that of the second color-adjusting layer 30. This is because rates of change of horizontal cross-sectional area of the micro-protrusion/depression reflective layer 20 in the first and second surface are different from each other. In this constitutional example, the difference in structural color based on asymmetry of the micro-protrusion/depression reflective layer 20 is further emphasized by the difference in refractive indices of the first color-adjusting layer 10 and the second color-adjusting layer 30. In this constitutional example, the refractive indices of the first color-adjusting layer 10 and the second color-adjusting layer 30 are adjusted such that different structural colors are observed from the front and back sides. When counterfeit preventing structure 300 shown in Fig. 2 is observed from the side of the first surface, light of the first color is observed in both of: region 310 in which the first color-adjusting layer 10, the micro-protrusion/depression reflective layer 20, and the second color-adjusting layer 20 are stacked; and region 320 where the second color-adjusting layer 20 does not exist. In other words, the counterfeit preventing structure 300 is observed as a body having a uniform color throughout the whole surface, under observation from the side of the first surface. Besides, when the counterfeit preventing structure 300 is observed from the side of the second surface, light of the second color, determined by the micro-protrusion/depression pattern of the micro-protrusion/depression reflective layer 20 and the refractive index of the second color-adjusting layer 30, is observed in region 310. Further, light of third color, determined by the micro-protrusion/depression pattern of the micro-protrusion/depression reflective layer 20 and the refractive index of air, is observed in region 320. Here, the first to third colors are different from each other, due to difference in refractive indices of the first color-adjusting layer 10, the second color-adjusting layer 30 and air. Therefore, the counterfeit preventing structure 300 provides images, both of shapes and colors of which are different from each other, under observation from the side of the first surface and observation from the side of the second surface.

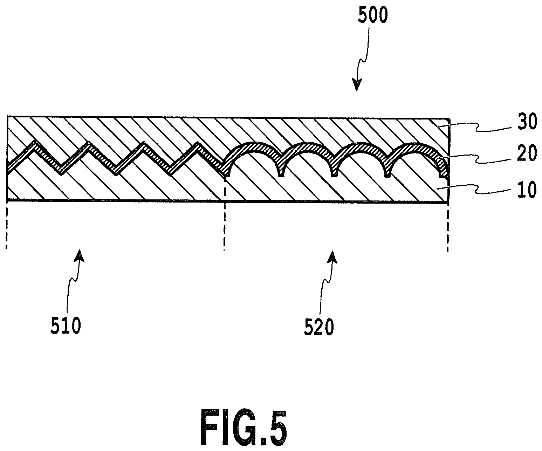

Fig. 5 shows a counterfeit preventing structure 500 having a different constitution in which the micro-protrusion/depression reflective layer 20 has region 510 comprising protrusions having an approximately triangular vertical cross-section and region 520 comprising hemispherical protrusions convex to the side of the second surface, and the second color-adjusting layer 30 is disposed entirely on the second surface of the micro-protrusion/depression reflective layer 20. As such, the micro-protrusion/depression reflective layer 20 may consists of a plurality of parts comprising different micro-protrusions and micro-depressions. The protrusions in the region 510 may be circular cones, polygonal cones, or triangular prisms extending from front side to back side on the paper surface (so-called corrugated structure wherein the vertical cross-section is a triangle).

In the counterfeit preventing structure 500, the structural color in the region 510 is different from the structural color in the region 520 under observation from the side of the first surface, since the rate of change in the horizontal cross-sectional area of the micro-protrusion/depression reflective layer 20 is different between the first and second surface. Similarly, under observation from the side of the second surface, the structural color in the region 510 is different from the structural color in the region 520. In this constitutional example, the difference in structural color based on asymmetry of the micro-protrusion/depression reflective layer 20 is further emphasized by the difference in refractive indices of the first color-adjusting layer 10 and the second color-adjusting layer 30. In this constitutional example, the refractive indices of the first color-adjusting layer 10 and the second color-adjusting layer 30 are adjusted such that different structural colors are observed from the front and back sides.

When counterfeit preventing structure 500 shown in Fig. 5 is observed from the side of the first surface, light of the first color is observed in region 510 comprising protrusions having an approximately triangular vertical cross-section, the first color being determined by the rate of change in horizontal cross-sectional area of the approximately triangular protrusions and the refractive index of the first color-adjusting layer 10. On the other hand, light of the second color is observed in region 520 comprising hemispherical depressions, the second color being determined by the rate of change in horizontal cross-sectional area of the hemispherical depressions and the refractive index of the first color-adjusting layer 10. Besides, when observing from the side of the second surface, light of the third color is observed in region 510 comprising protrusions having an approximately triangular vertical cross-section, the third color being determined by the rate of change in horizontal cross-sectional area of the approximately triangular protrusions and the refractive index of the second color-adjusting layer 30. On the other hand, light of the fourth color is observed in region 520 comprising hemispherical protrusions, the second color being determined by the rate of change in horizontal cross-sectional area of the hemispherical protrusions and the refractive index of the second color-adjusting layer 30. Here, the first to fourth colors are different from each other, due to difference in cross-section, rate of change in horizontal cross-sectional area, and refractive indices of the first color-adjusting layer 10 and the second color-adjusting layer 20. Therefore, the counterfeit preventing structure 500 provides images with different colors, under observation from the side of the first surface and observation from the side of the second surface.

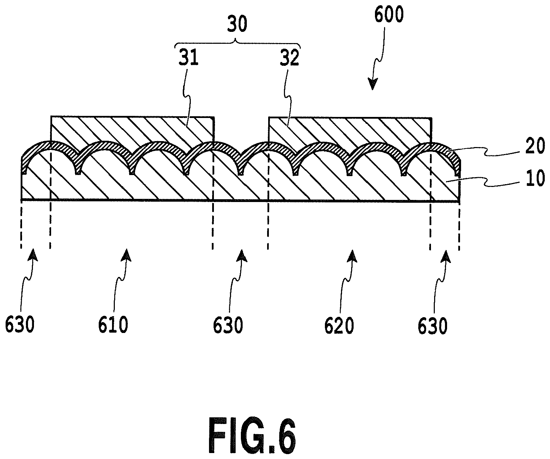

Fig. 6 shows a counterfeit preventing structure 600 having a different constitution, which is similar to the constitution shown in Fig. 3 except that the second color-adjusting layer 30 consists of first second color-adjusting layer 31 and second second color-adjusting layer 32, the refractive indices of which are different from each other. As such, the second color-adjusting layer 30 may consists of a plurality of parts having different refractive indices. In this case, at least one of the plurality of parts of the second color-adjusting layer 30 has a refractive index different from that of the first color-adjusting layer 10.

In the counterfeit preventing structure shown in Fig. 6, light of first color is observed in all of region 610 where the first color-adjusting layer 10, the micro-protrusion/depression reflective layer 20 and the first second color-adjusting layer 31 are stacked, region 620 where the first color-adjusting layer 10, the micro-protrusion/depression reflective layer 20 and the second second color-adjusting layer 32 are stacked, and region 630 where the second color-adjusting layer 30 does not exist, the first color being determined by the micro-protrusion/depression pattern of the micro-protrusion/depression reflective layer 20 and the refractive index of the first color-adjusting layer 10. In other words, the counterfeit preventing structure 600 is observed as a body having a uniform color throughout the whole surface, under observation from the side of the first surface. Besides, when observing from the side of the second surface, light of the second color is observed in region 610, the second color being determined by the micro-protrusion/depression pattern of the micro-protrusion/depression reflective layer 20 and the refractive index of the first second color-adjusting layer 31. On the other hand, light of the third color is observed in region 620, the second color being determined by the micro-protrusion/depression pattern of the micro-protrusion/depression reflective layer 20 and the refractive index of the second second color-adjusting layer 32. Further, light of the fourth color is observed in region 630, the fourth color being determined by the micro-protrusion/depression pattern of the micro-protrusion/depression reflective layer 20 and the refractive index of air. Here, the first to fourth colors are different from each other, due to difference in refractive indices of the first color-adjusting layer 10, the first second color-adjusting layer 31, the second second color-adjusting layer 32 and air. Therefore, the counterfeit preventing structure 500 provides images, both of shapes and colors of which are different from each other, under observation from the side of the first surface and observation from the side of the second surface.

### (Method for manufacturing a micro-protrusion/depression structure)

For the micro-protrusion/depression structure of the counterfeit preventing structure of the present invention, it is practical to use a resin for constituting the first or second color-adjusting layer, and to form a micro-protrusion/depression pattern onto the surface of the resin. Hereinafter, a case where the micro-protrusion/depression pattern is formed on the surface of the first color-adjusting layer will be explained. Similar method can be adopted in forming the micro-protrusion/depression pattern on the second color-adjusting layer.

Typical methods for duplicating the micro-protrusion/depression pattern onto the surface of the resin continuously and on a large scale include "a coating method", "a pressing method" described in Japanese Patent Laid-Open No. H02-037301(1990), "a casting method" described in Japanese Patent Laid-Open No. 2007-329007, and "a photopolymer method" described in Japanese Patent Laid-Open No. H01-291926(1989) (see PTL4 to PTL6).

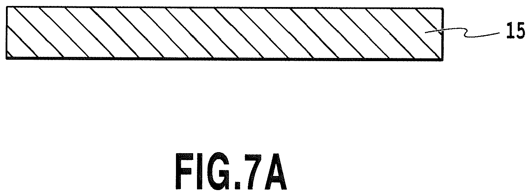

A method for forming the first color-adjusting layer by the coating method will be explained with reference to Figs. 7A-7E. First, the material of the first color-adjusting layer 10 is applied onto a supporting substrate (not shown) to form first precursor layer 15 having a flat surface, as shown in Fig. 7A. In particular, it is preferable to adopt a wet method, in order to reduce a manufacturing cost. Further, the first precursor layer 15 may be formed by applying the material diluted with a solvent, followed by drying, in order to control the thickness of the resultant first precursor layer 15. The useful material will be described later.

The supporting substrate useful in the coating method is preferably made from a material exhibiting low deformation and decomposition due to application of heat, pressure, and/or electromagnetic wave in formation of the micro-protrusion/depression pattern set forth below. Preferable supporting substrates comprise film of organic resin, paper, synthetic paper, plastic-composite paper, and resin-impregnated paper. More preferable supporting substrates is the film of organic resin. Useful organic resin includes polyethylene terephthalate (PET), polyethylene naphthalate (PEN), and polypropylene (PP).

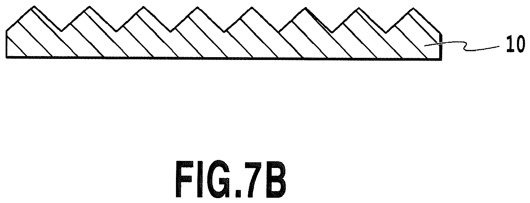

The first color-adjusting layer 10 is formed by contacting the resultant first precursor layer 15 with a relief master (not shown) on which a relief shape has been formed, and applying heat, pressure, light, and/or electromagnetic wave, which is dependent on the material of the first precursor layer 15, to transfer the inverted shape of the relief master to the first precursor layer 15, as shown in Fig. 7B. The relief shape on the relief master is an inverted shape of the desired micro-protrusion/depression pattern. If the first precursor layer 15 is made from thermoplastic resin, it is preferable to apply heat and pressure to the first precursor layer 15 in the state where the first precursor layer 15 is in contact with the relief master. If the first precursor layer is made from thermosetting resin, it is preferable to first apply pressure to the first precursor layer in the state where the first precursor layer 15 is in contact with the relief master, to transfer the shape, followed by application of heat. If the first precursor layer is made from photocurable resin, it is preferable to first apply pressure to the first precursor layer in the state where the first precursor layer 15 is in contact with the relief master, to transfer the shape, followed by application of light or electromagnetic wave to cure the photocurable resin. The application of heat in the case where the thermosetting resin is used, and the application of light or electromagnetic wave in the case where the photocurable resin is used may be conducted in the state where the first precursor layer 15 is in contact with the relief master, or after separating the first precursor layer 15 from the relief master.

The first precursor layer 15 having a flat surface may have a thickness in a range of from 0.1 µm to 10 µm. Dependent on the method for forming the micro-protrusion/depression pattern described below, protrusion of the resin due to pressurizing and/or cockles may occur, if the thickness of the first precursor layer 15 is too large. On the other hand, it is difficult to obtain the desired protrusion/depression pattern due to lack of flowability of the material, if the thickness of the first precursor layer 15 is too small. Dependent on the shape of the desired micro-protrusion/depression pattern, the first precursor layer has a thickness of preferably 1 to 10 times, more preferably 3 to 5 times, as large as the desired depth of protrusions and depressions.

Here, the relief master can be formed by any method publicly known in the art. Further, by adopting a relief master in a roll form, formation of the first precursor layer 15 onto the supporting substrate and formation of the first color-adjusting layer 10 by using the relief master can be carried out continuously.

Alternatively, the first color-adjusting layer 10 can be formed by the "photopolymer method" (also referred to as "a 2P method" or "a photosensitive resin method"). The "photopolymer method" comprises the steps of casting radiation-curable resin into the gap between a relief mold (a mold for duplication of the micro-protrusion/depression pattern) and a flat substrate (a plastic film and the like), curing the casted radiation-curable resin by radiation (including visible light and ultraviolet light), and removing the substrate and the cured resin film from the relief mold. The protrusion/depression pattern having high definition can be obtained by the "photopolymer method". Further, the structure obtained by this method has a high accuracy in formation of the protrusion/depression pattern, excellent heat resistance, and excellent chemical resistance, in comparison with the structure obtained by the "pressing method" and "casting method" in which thermoplastic resin is used. A method using a photocurable resin which is in a solid state at the normal temperature or a radiation-curable resin which exhibits high viscosity at the normal temperature, and a method in which a releasing material is added between the relief mold and the radiation-curable resin are known as further novel methods.

Alternative methods for forming the micro-protrusion/depression pattern include a method utilizing a monolayer particle film. For example, a monolayer particle film in which spherical particles are two dimensionally closest packed onto a plane can be used effectively. The monolayer particle film can be obtained by aligning particles having a uniform diameter. For example, the monolayer particle film can be obtained by a method of slowly pulling up a supporting substrate immersed in a solution of particles at a constant rate (pull-up method). Alternatively, the monolayer particle film can be manufactured by a method of printing the "particulate ink" in which a binder resin is added to a particulate-dispersed solution with precisely controlling the applying amount per unit area, to fix the particulates onto a supporting substrate (printing method). Further, it is possible to obtain a structure in which button-shaped protrusions are two dimensionally closest packed on a plane, by applying thermal press treatment to a monolayer particle film made of spherical particles of thermoplastic material to deform the spherical particles to the flattened state. Further, the monolayer particle film may be formed from irregularly shaped particles having an approximately uniform diameter. The monolayer particle film formed from the irregularly shaped particles can provide: structural color derived from a periodic structure dependent on two-dimensional filling ratio of the particles; and scattered light derived from the shape of the irregularly shaped particles. The micro-protrusion/depression pattern obtained by using the monolayer particle film has an advantage that the steady protrusion/depression shape is obtained with high productivity.

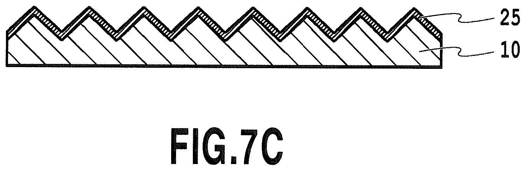

Subsequently, onto the first color-adjusting layer 10 having the micro-protrusion/depression pattern is formed reflective precursor layer 25, as shown in Fig. 7C.

The reflective precursor layer 25 can be formed by applying highly bright reflective ink onto the first color-adjusting layer 10, the ink containing particulates of the reflective material which constitutes micro-protrusion/depression reflective layer 20, a solvent, and an optional binder. The highly bright reflective ink can be applied onto the first color-adjusting layer 10 by any of known printing techniques such as an inkjet method, a gravure method, a micro gravure method, a roll coating method, and a dip coating method. It is preferable to set the applying amount of the ink to the extent that the micro-protrusion/depression pattern of the first color-adjusting layer 10 is not filled up after drying the ink. In other words, the applying amount of the ink is desirably set to the extent that the micro-protrusion/depression pattern, to which the micro-protrusion/depression pattern of the first color-adjusting layer 10 is reflected, is formed on the upper surface of the reflective precursor layer 25. It is preferable that the thickness of the reflective precursor layer 25, which is determined by the applying amount of the ink, is not greater than a half (1/2) of the depth of the micro-protrusion/depression pattern of the first color-adjusting layer 10.

Further, it is desirable that the particulates of reflective material in the highly bright reflective ink has a particle diameter of not greater than a fifth (1/5) of the period of protrusions and depressions of the micro-protrusion/depression pattern of the first color-adjusting layer 10, and not greater than a fifth (1/5) of the depth of protrusions and depressions of the micro-protrusion/depression pattern of the first color-adjusting layer 10. A desirable reflectivity can be obtained, and loss of structural color due to fill-up of the micro-protrusion/depression pattern of the first color-adjusting layer 10 can be prevented, by adopting the particulates of reflective material having the particle diameter in the above-described range.

Alternatively, the reflective precursor layer 25 can be formed by a dry-coating method. The dry coating method include any method publicly known in the art, such as a vacuum deposition method, a sputtering method, and a CVD method. The dry-coating method is preferable in that a thin film having a uniform thickness can be obtained without burying the micro-protrusion/depression pattern of the first color-adjusting layer 10.

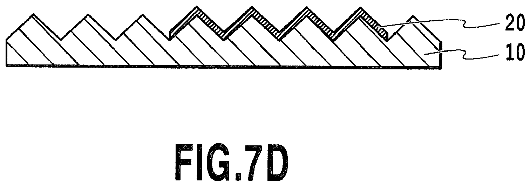

Subsequently, the reflective precursor layer 25 is optionally patterned to form micro-protrusion/depression reflective layer 20, as shown in Fig. 7D. It is possible to use the reflective precursor layer 25 as the micro-protrusion/depression reflective layer 20 by omitting this step, in the case where the micro-protrusion/depression reflective layer 20 is provided on the whole surface of the first color-adjusting layer 10 as shown in Fig. 2. Here, the surface of the micro-protrusion/depression reflective layer 20 which is in contact with the first color-adjusting layer 10 is the first surface of the micro-protrusion/depression reflective layer 20. Further, the surface opposite to the first surface and onto which second precursor layer 35 (set forth below) will be formed is the second surface of the micro-protrusion/depression reflective layer 20.

The reflective precursor layer 25 can be patterned by a wet-etching method using an etching liquid, or a dry-etching method such as a plasma-etching method, and a reactive ion etching method.

In the case where the micro-protrusion/depression reflective layer 20 is formed on only partial region (s) of the surface of the first color-adjusting layer 10, the micro-protrusion/depression reflective layer 20 can be formed by: a method of wet-applying the reflective material for constituting the micro-protrusion/depression reflective layer 20 pattern-wise onto the first color-adjusting layer 10; a method of dry-depositing the reflective material for constituting the micro-protrusion/depression reflective layer 20 pattern-wise onto the first color-adjusting layer 10 (see International Patent Publication No. WO 2010/147185); or a method of previously disposing a patterned resist onto the first color-adjusting layer 10, applying or depositing the reflective material over the resist, and removing the resist and the reflective material on the resist (a so-called "lift-off method") (See PTL3).

Alternatively, the micro-protrusion/depression reflective layer 20 may have an arbitrary pattern, or may consist of a plurality of discrete parts. The counterfeit preventing structure having such micro-protrusion/depression reflective layer 20 can be considered as a counterfeit preventing structure in which the micro-protrusion/depression reflective layer 20 is partially provided. For example, an etching treatment after providing an etching mask onto the reflective precursor layer 25 can remove the part of the reflective precursor layer 25 which is not covered with the etching mask. The etching mask can be provided by any known printing method such as gravure printing, inkjet printing, and offset printing, or a photolithography method utilizing photoresist material. The micro-protrusion/depression reflective layer 20 having the arbitrary pattern, or consisting of a plurality of discrete parts can be formed by such methods.

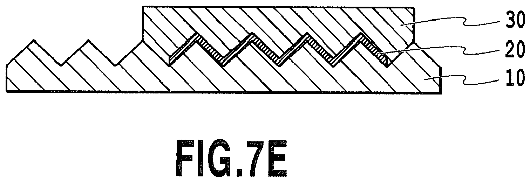

Subsequently, the material of second color-adjusting layer 30 is applied onto at least partial region(s) of the micro-protrusion/depression reflective layer 20 and optionally at least partial region(s) of the first color-adjusting layer 10 to form the second color-adjusting layer 30 to obtain a counterfeit preventing structure. The surface of the micro-protrusion/depression reflective layer 20 in contact with the second color-adjusting layer 30 is the second surface of the micro-protrusion/depression reflective layer 20. Fig. 7E shows an example where the second color-adjusting layer 30 is formed on the whole surface of the micro-protrusion/depression reflective layer 20 and on the surface of the first color-adjusting layer 10 which is positioned on the periphery of the micro-protrusion/depression reflective layer 20.

Application of the material can be carried out by any technique known in the art including printing methods, transferring methods, and laminating methods. The useful printing methods include an inkjet printing method, a gravure printing method, a micro gravure printing method, a roll coating printing method, and a flexographic printing method. The transferring methods involve transferring a dye and/or a pigment by applying heat or pressure. The laminating method involve the step of adhering a light-transparent coating or film via an adhesive layer, onto the micro-protrusion/depression reflective layer 20, or the micro-protrusion/depression reflective layer 20 and the first color-adjusting layer 10. If the coating or film to be adhered has adhesive properties, the adhesive layer may not be used. Further, in the case where plural types of the second color-adjusting layers are used, the plural types of the second color-adjusting layers can be formed by repeating application of the material of each of the layers by the above-described methods.

Fig. 7E shows an example that the second color-adjusting layer 30 has a large thickness to the extent that the protrusions and depressions of the micro-protrusion/depression reflective layer 20 and the first color-adjusting layer 10 is totally filled up. In this example, the second color-adjusting layer 30 has a nonuniform thickness. However, the second color-adjusting layer 30 may have a uniform thickness. In other words, the second color-adjusting layer may have protrusions and depressions on its upper surface. The second color-adjusting layer 30 may have the flat or protrusion/depression upper surface, as long as the second color-adjusting layer 30 has a sufficient thickness to cause the above-described change in structural color due to the refractive index in the vicinity of the bottom of the depressions of the micro-protrusion/depression reflective layer 20. Besides, surface treatments such as a corona treatment, a flame treatment, and a plasma treatment can be carried out to improve adhesion between the layers, together with formation of each of the above-described layers. Alternatively, an adhesion anchoring layer (not shown) may be optionally provided between two layers.

### (Material of constituent layers)

The micro-protrusion/depression reflective layer 20 is characterized by covering at least a part of the micro-protrusion/depression surface and reflecting electromagnetic wave. In the case where light incident through the first color-adjusting layer 10 or the second color-adjusting layer 30 set forth below is to be reflected, it is preferable to form the micro-protrusion/depression reflective layer 20 from metal, metal oxide, metal sulfide, or organic polymer. In this case, it is preferable to set the difference of the refractive indices of the first color-adjusting layer 10 and the second color-adjusting layer from the refractive index of the micro-protrusion/depression reflective layer 20 to not less than 0.2. It becomes possible to obtain structural color due to diffraction of the electromagnetic wave at the interface between the first color-adjusting layer 10 and the micro-protrusion/depression reflective layer 20, and the interface between the second color-adjusting layer 30 and the micro-protrusion/depression reflective layer 20, by setting the difference in refractive index to not less than 0.2. However, it is desirable to form the micro-protrusion/depression reflective layer 20 from a material having opacifying properties, in order to exclude optical effect on the back surface (the second surface for the first surface, and vice versa). The "material having opacifying properties" means a material having a total light transmittance at a flat surface of not greater than 25%, preferably not greater than 10%.

Metal useful to form the micro-protrusion/depression reflective layer 20 includes Al, Sn, Cr, Ni, Cu, Au, Ag, and alloys thereof. Useful metal oxide includes, but not limited to, Sb₂O₃, Fe₂O₃, TiO₂, CeO₂, PbCl₂, CdO, WO₃, SiO, Si₂O₃, In₂O₃, PbO, Ta₂O₃, ZnO, ZrO₂, MgO, SiO₂, Si₂O₂, MgF₂, CeF₃, CaF₂, AlF₃, Al₂O₃, and GaO. Useful metal sulfide includes, but not limited to, CdS and ZnS. Useful organic polymer includes, but not limited to, polyethylene, polypropylene, polytetrafluoroethylene, polymethyl methacrylate and polystyrene. As necessary, the micro-protrusion/depression reflective layer 20 may be formed from plural types of material. Alternatively, the micro-protrusion/depression reflective layer 20 may have a stacked structure of a plurality of layers of different material. The micro-protrusion/depression reflective layer 20 may have an arbitrary pattern, or may consist of a plurality of discrete parts, as described above.

The first color-adjusting layer 10 and the second color-adjusting layer 30 can be formed from thermoplastic resin, thermosetting resin, or photocurable resin. Useful thermoplastic resin includes, but not limited to, acryl-based resin, polyester-based resin, cellulose-based resin and vinyl-based resin. Useful thermosetting resin includes, but not limited to, urethane resin obtained by reaction between acrylic polyol or polyester polyol having reactive hydroxyl groups and polyisocyanate, melamine-based resin, epoxy resin, and phenol-based resin. The material for forming the first color-adjusting layer 10 and the second color-adjusting layer 30 can be selected in view of the factors that the material has a sufficient flowability to allow formation by the adopting production method, and that the resultant layer has desired heat resistance and chemical resistance.

The photocurable resin useful in a photopolymer method and the like can be obtained by using a composition utilizing radical photopolymerization, a composition utilizing cationic photopolymerization, or a composition utilizing both of radical and cationic photopolymerization (a hybrid polymerization-type composition).

The composition utilizing radical photopolymerization contains a radically polymerizable monomer, oligomer, or polymer, and a radical photopolymerization initiator. Here, mixtures of two or more types of the radically polymerizable monomer, oligomer, or polymer may be used. The radically polymerizable monomer includes, but not limited to, 1,6-hexanediol diacrylate, neopentyl glycol diacrylate, trimethylolpropane triacrylate, pentaerythritol triacrylate, pentaerythritol tetraacrylate, dipentaerythritol pentaacrylate, and dipentaerythritol hexaacrylate. The radically polymerizable oligomer includes, but not limited to, epoxy acrylate oligomer, urethane acrylate oligomer, and polyester acrylate oligomer. The radically polymerizable polymer includes, but not limited to, acrylate-containing urethane resin and acylate-containing epoxy resin. Useful radical photopolymerization initiator includes, but not limited to: benzoin-based compounds such as benzoin, benzoin methyl ether and benzoin ethyl ether; anthraquinone-based compounds such as anthraquinone and methyl anthraquinone; phenyl ketone-based compounds such as acetophenone, diethoxyacetophenone, benzophenone, hydroxyacetophenone, 1-hydroxycyclohexyl phenyl ketone, α-aminoacetophenone, 2-methyl-1-(4-methylthiophenyl)-2-morpholinopropane-1-one, and Michler's ketone (4,4'-bis(dimethylamino)benzophenone); benzil dimethyl ketal; thioxanthones; and acylphosphine oxides.

The composition utilizing cationic photopolymerization contains a cationically polymerizable monomer, oligomer, or polymer, and a cationic photopolymerization initiator. The cationically polymerizable monomer includes, but not limited to, epoxy-containing monomer, oxetane-containing monomer, and vinyl ethers. Cationically polymerizable oligomer or polymer includes, but not limited to, epoxy group-containing oligomer and epoxy group-containing polymer. The cationic photopolymerization initiator includes, but not limited to, aromatic diazonium salts, aromatic iodonium salts, aromatic sulfonium salts, aromatic phosphonium salts, and metal salts with mixed ligands.

The hybrid polymerization-type composition contains: a radically polymerizable monomer, oligomer, or polymer; a cationically polymerizable monomer, oligomer, or polymer; a radical photopolymerization initiator; and a cationic photopolymerization initiator. Here, aromatic iodonium salts or aromatic sulfonium salts, which function as both of the radical photopolymerization initiator and the cationic photopolymerization initiator, may be used as a single polymerization initiator.

In the above-described compositions, the content of the photopolymerization initiator is normally in a range of 0.1 to 15% by weight based on the total weight of the composition, although it depends on the type of monomer, oligomer, or polymer to be used. Further, the above-described compositions may further contain a sensitizing dye, in combination with the photopolymerization initiator. Further, as required, the above-described compositions may further contain a colorant such as a dye or a pigment, a cross-linking agent, and/or various types of additives. The useful cross-linking agent includes epoxy group-containing oligomer, or epoxy group-containing polymer. The useful additive includes any additive known in the art such as a polymerization inhibitor, a leveling agent, an antifoaming agent, an anti-sagging agent, an adhesion promoter, a coated surface modifier, a plasticizer, and nitrogen-containing compounds. Further, formability can be improved by adding non-reactive resin to the radically photopolymerizable composition, cationically photopolymerizable composition, or hybrid polymerization-type composition.

Curing by cross-linking may be carried out by introducing an ethylenically unsaturated group or a cross-linking-reactive group into the resin obtained by the above-described method. In the case where the ethylenically unsaturated group is utilized, cross-linking can be carried out by the above-described radical photopolymerization initiator or a thermal radical polymerization initiator. In the case where the cross-linking-reactive group is utilized, useful cross-linking agent includes, but not limited to, isocyanate compounds, a silane-coupling agent, an organic titanate cross-linking agent, an organic zirconium cross-linking agent, and an organic aluminate cross-linking agent. Especially, the resin into which the ethylenically unsaturated group is introduced is in a solid state at the normal temperature and exhibits low tackiness (stickiness). Thus, the resin into which the ethylenically unsaturated group is introduced exhibits characteristics of low contamination of the master, as well as excellent formability.

Alternatively, the first color-adjusting layer 10 and the second color-adjusting layer 30 can be formed by applying a liquid ink containing a film-forming material and drying the ink. The useful film-forming material includes organic compounds, inorganic compounds, and organic-inorganic composite material. Useful organic compounds include, but not limited to, acrylic resin, polyester resin, urethane resin, epoxy resin, and melamine resin. Useful inorganic compounds include, but not limited to, metal alkoxide such as ethyl silicate, propyl silicate, and butyl silicate. Useful organic-inorganic composite material includes material in which the above-described organic and inorganic compounds are chemically bonded.

In the present invention, the first color-adjusting layer 10 has a refractive index different from that of the second color-adjusting layer 30. Difference in refractive index between the first color-adjusting layer 10 and the second color-adjusting layer 30 is not less than 0.1, preferably in a range from 0.2 to 0.4. However, in view of the protrusion/depression structure to be used and the desired optical effects, the difference in refractive index between the first color-adjusting layer 10 and the second color-adjusting layer 30 may be appropriately adjusted. For example, in the case of protrusion/depression structure having a rectangular vertical cross-section, interference between the top and bottom faces of the rectangle occurs. Interference is caused by difference in optical path length (product of the refractive index and the depth of the structure) between two optical paths. Thus, taking the optical path lengths into consideration, the refractive indices of the first color-adjusting layer 10 and the second color-adjusting layer 30 can be appropriately adjusted so as to obtain desired structural color. In the case where the second color-adjusting layer 30 consists of a plurality of parts having different refractive indices, it is desirable that difference of the refractive index of at least one of the plurality of parts from the refractive index of the first color-adjusting layer 10 is within the range described above. By utilizing the first color-adjusting layer 10 and the second color adjusting layer 20, difference in refractive index of which is within the above-described range, different optical effects can be obtained in observation from the first color-adjusting layer and observation from the side of the second color-adjusting layer, even when the micro-protrusion/depression reflective layer 20 having the same protrusion/depression shapes on the first and second surfaces.

The refractive indices of the first color-adjusting layer 10 and the second color-adjusting layer 30 can be adjusted by further inclusion of one or more types of particulates. The one or more types of particulates may be organic particulates, inorganic particulates, or organic-inorganic composite particulates. The material of the organic particulates includes, but not limited to, acrylic resin, urethane resin, melamine resin, epoxy resin, vinyl chloride resin, and vinyl acetate resin. The material of the inorganic particulates includes, but not limited to, metal oxide such as aluminum oxide, titanium oxide, cerium oxide, yttrium oxide, zinc oxide, silicon oxide, tin oxide, copper oxide, iron oxide, manganese oxide, holmium oxide, bismuth oxide, cobalt oxide, and indium tin oxide (ITO), and elemental metal. The organic-inorganic composite particulates include, but not limited to, particulates made from mixed material and particulates having a core-shell structure. Alternatively, hollow particulates inside of which gas is filled may be used. It is desirable that the particulates to be used have an average particle diameter of not greater than 100 nm, preferably in a range from 5 nm to 30 nm. The "average particle diameter" in the present invention means a number-average value (n=50) of primary particle diameter of the particulates obtained by observation with a transmission electron microscope (TEM). It becomes possible to adjust the refractive indices of the first color-adjusting layer 10 and the second color-adjusting layer 30, along with controlling the strength of light scattering caused by the particulates, preventing coating non-uniformity due to reduced stability in dispersion of the particulates, and preventing increase of the cost of the particulates.

Further, the first color-adjusting layer 10 and the second color-adjusting layer 30 may further contain a colorant. The color-adjusting layer containing the colorant can exhibit a more complicated color tone by combination of the color provided by the colorant and the structural color. A useful colorant includes, but not limited to, a pigment and a dye which absorb or reflect a certain wavelength range of visible light. The color-adjusting layer containing the colorant desirably has a transmittance of not less than 50% over the whole wavelength range of visible light which is not less than 400 nm and not greater than 800 nm. The structural color caused by the color-adjusting layer (the first color-adjusting layer 10 and the second color-adjusting layer 30) and the micro-protrusion/depression reflective layer 20 can be observed from the outside, by adopting the above-described range of transmittance.

The first color-adjusting layer 10 and the second color-adjusting layer 30 desirably has a high surface hardness, excellent resistance to wear, and excellent resistance to scratching, since these layers may become the outmost layer of the counterfeit preventing structure of the present invention. Optionally, the counterfeit preventing structure of the present invention may comprise a protective layer (not shown) which covers the exposed surface of the first color-adjusting layer 10 and/or the second color-adjusting layer 30, or the whole surface of the first color-adjusting layer 10 and/or the second color-adjusting layer 30. The protective layer can be formed from thermoplastic resin, thermosetting resin, photocurable resin, two-liquid-mixing and curing resin, or hard coat material such as silicone resin and fluorine resin. The protective layer may further contain an additive known in the art such as waxes or a lubricant, in addition to the above-described material.

The protective layer may cover the exposed surface of the micro-protrusion/depression reflective layer 20 which is not covered with the first color-adjusting layer 10 or the second color-adjusting layer 30. In this case, it is desirable that the protective layer covering the exposed part of the first surface of the micro-protrusion/depression reflective layer 20 has a refractive index different from that of the first color-adjusting layer 10, so that the region where the first color-adjusting layer 10 is provided exhibits a structural color different from that exhibited by the region where the protective layer is in contact with the micro-protrusion/depression reflective layer 20. Similarly, it is desirable that the protective layer covering the exposed part of the second surface of the micro-protrusion/depression reflective layer 20 has a refractive index different from that of the second color-adjusting layer 30, so that the region where the second color-adjusting layer 30 is provided exhibits a structural color different from that exhibited by the region where the protective layer is in contact with the micro-protrusion/depression reflective layer 20. In the case where the micro-protrusion/depression reflective layer 20 is pattern-wise or consists of a plurality of discrete parts, the protective layer may have the same shape as that of the regions of the micro-protrusion/depression reflective layer 20.

An anti-reflective coating (not shown) may be provided onto the outmost surface of the counterfeit preventing structure of the present invention, in order to improve optical properties of the structure. Further, the counterfeit preventing structure may be in the form of a counterfeit preventing seal by further comprising an adhesive layer (not shown) and a base layer (not shown), for the purpose of enhancement of convenience. Alternatively, the counterfeit preventing structure of the present invention can be used in the form of a counterfeit preventing transfer foil which has a function of transferring the structure from a base layer (not shown). Further, the counterfeit preventing structure of the present invention can be blended into a paper, as long as the structure is observable from both sides.

Further, the present invention also relates to a counterfeit preventing article comprising an article having a transparent part, and the counterfeit preventing structure disposed on the transparent part of the article. The article having the transparent part includes: a personal authentication medium such as various types of cards, a passport, and a mobile phone; securities such as a bill and a bank note; and a counterfeit preventing medium for brand protection. The "personal authentication medium" in the present invention means a medium on which personal information is described or a medium in which the electronic data of personal information is stored. The counterfeit preventing structure is disposed on the transparent part of the article, so that different optical effects are also observable from the front and back sides, in the resultant counterfeit preventing article. Therefore, it is remarkably difficult to counterfeit the above-described counterfeit preventing article.

### [Examples]

### (Example 1)

To a transparent polyethylene terephthalate film having a thickness of 23 µm was applied an ink composition ("RL-9" manufactured by KSM Co., Ltd.) by gravure printing, to obtain a coating having a thickness of 1 µm after drying.

Subsequently, a cylindrical master having a reversed shape of the desirable micro-protrusions and micro-depressions was moved at a rate of 10 m/minute, and pressed to the coating under a pressure of 2 kgf/cm² (about 0.2 MPa) at a temperature of 80°C, to transfer micro-protrusions and micro-depressions. Simultaneously with transferring, the coating is irradiated with ultraviolet light emitted from a high-pressure mercury lamp through a polyethylene terephthalate for cuing the coating to which the micro-protrusions and micro-depressions had been transferred, to obtain first color-adjusting layer 10. The energy density of the ultraviolet light was 300 mJ/cm². The resultant micro-protrusions and micro-depressions had a grid structure consisting of a plurality of parallel grooves having a depth of 280 nm and disposed at a period of 400 mm, the vertical cross-section perpendicular to the grooves having a shape like a sine curve. The resultant first color-adjusting layer had a refractive index of 1.43.

Subsequently, aluminum was deposited by a vacuum deposition method onto the whole surface of the first color-adjusting layer 10 on which micro-protrusions and micro-depressions had been formed, to form micro-protrusion/depression reflective layer 20. The micro-protrusion/depression reflective layer 20 had a thickness of 50 nm on the flat parts of the first color-adjusting layer 10.

Subsequently, transparent resin having a refractive index of 1.72 ("HX-101" available from Nissan Chemical Industries, Ltd.) was applied onto the whole exposed surface of the micro-protrusion/depression reflective layer 20 by a roll coating method, and the coated film was dried to form second color-adjusting layer 30 which covers the whole surface of the micro-protrusion/depression reflective layer 20, to obtain a counterfeit preventing structure. The second color-adjusting layer which was formed had a thickness of 2 µm in the flat parts.

### (Comparative Example 1)

The procedure of Example 1 was repeated to obtain a counterfeit preventing structure, except that the second color-adjusting layer 30 having a thickness of 2 µm and a refractive index of 1.43 was formed by applying the ink composition which had been used to form the first color-adjusting layer 10 onto the micro-protrusion/depression reflective layer 20 and irradiating the coated film with ultraviolet light having an energy density of 300 mJ/cm².

### (Comparative Example 2)

The procedure of Example 1 was repeated to obtain a counterfeit preventing structure, except that transparent resin having a refractive index of 1.5 ("HITAROID 7851" available from Hitachi Chemical Co. , Ltd.) was used for forming the second color-adjusting layer 30.

### (Comparison of Structural Color)

The color tone was visually evaluated under observation from the direction perpendicular to the grooves of the protrusion/depression structure and at the angle of 80° to the principal plane of the counterfeit preventing structure, in the counterfeit preventing structure. The results were shown in Table 1 set forth below.

[Table 1]

**Table 1: Constitution and Structural Color of Counterfeit Preventing Structures**

| Exampl es | Refractive index | | Color tone of structural color | |
|---|---|---|---|---|
| | First color-adjus ting layer | Second color-adjus ting layer | Side of first color-adjus ting layer (Side of first surface) | Side of second color-adjus ting layer (Side of second surface) |
| Ex. 1 | 1.43 | 1.72 | Blue | Pink |
| C. Ex. 1 | 1.43 | 1.43 | Blue | Blue |
| C. Ex. 2 | 1.43 | 1.5 | Blue | Blue |

As understood from Table 1, the counterfeit preventing structure of Example 1 provided optical effects exhibiting different color tones under observation from the front and back sides. The counterfeit preventing structures of Comparative Examples 1 and 2 exhibited the same color tone under observation from the front and back sides, and no special attributes were observed in these structures.

The optical effects exhibiting different color tones under observation from the front and back sides are especially effective in the case where the micro-protrusion/depression reflective layer 20 is disposed in the part of the counterfeit preventing structure as shown in Fig. 1. If counterfeiting of these optical effects is intended, supposed method might include the steps of: providing a reflective layer, a first colored layer to be disposed onto one surface of the reflective layer, and a second colored layer to be disposed onto the other surface of the reflective layer; and adhering the above three layers in a perfectly registered state. However, counterfeiting for perfectly reproduce the optical effects of the present invention is difficult, since such perfect registering is very difficult.

Besides, examples exhibiting relatively sober color tones of green and black colors are provided in the above-described examples. However, it is possible to obtain constitutions having greater design impression which provides red color light with a metallic luster under observation from the front side and green color light with a metallic luster under observation from the back side, for example, by selecting the constitution of the counterfeit preventing structure (including the structure of the micro-protrusion/depression reflective layer 20, and refractive indices of the first color-adjusting layer 10 and the second color-adjusting layer 30).

### Reference Signs List

- 10: First color-adjusting layer
- 15: First precursor layer
- 20: Micro-protrusion/depression reflective layer
- 30: Second color-adjusting layer
- 31, 32: First and second second color-adjusting layers
- 100, 200, 300, 500, 600: Counterfeit preventing structure
- 110, 120, 210, 220, 310, 320, 510, 520, 610, 620, 630: Regions

## Claims

1. A counterfeit preventing structure comprising:
a micro-protrusion/depression reflective layer having a first surface having micro-protrusions and micro-depressions and a second surface opposite to the first surface and having micro-protrusions and micro-depressions;
a first color-adjusting layer provided on the at least a part of the first surface and in contact with the first surface; and
a second color-adjusting layer provided on the at least a part of the second surface and in contact with the second surface, wherein:
the first color-adjusting layer has a refractive index different from a refractive index of the second color-adjusting layer;
the first and second surfaces of the micro-protrusion/depression reflective layer have micro-protrusion/depression surfaces causing structure colors by reflecting, interfering, diffracting, scattering and/or absorbing light of at least a portion of visible region;
optical effects obtained under observation from the side of the first color-adjusting layer are different from optical effects obtained under observation from the side of the second color-adjusting layer; and
the difference between refractive indices of the first and second color-adjusting layers is 0.1 or more.

2. The counterfeit preventing structure according to Claim 1, wherein the micro-protrusion/depression reflective layer has the same protrusion/depression shape on the first and second surfaces.

3. The counterfeit preventing structure according to Claim 1 or 2, wherein the micro-protrusion/depression reflective layer has a protrusion/depression shape which is rectangular in the vertical cross-section.

4. The counterfeit preventing structure according to Claim 1 or 2, wherein the micro-protrusion/depression reflective layer has a protrusion/depression shape in which a horizontal cross-sectional area varies monotonously from the top to the bottom.

5. The counterfeit preventing structure according to any one of Claims 1 to 4, wherein the micro-protrusion/depression reflective layer is provided at the part of the counterfeit preventing structure, and the counterfeit preventing structure further comprises a protective layer covering the micro-protrusion/depression reflective layer and having the same shape as the shape of the micro-protrusion/depression reflective layer.

6. The counterfeit preventing structure according to any one of Claims 1 to 5, wherein the micro-protrusion/depression reflective layer consists of a plurality of parts having different micro-protrusions and micro-depressions.

7. The counterfeit preventing structure according to any one of Claims 1 to 6, wherein the second color-adjusting layer consists of a plurality of parts having different refractive indices, and at least one of the parts of the second color-adjusting layer has a different refractive index from the refractive index of the first color-adjusting layer.

8. A counterfeit preventing article comprising an article including a transparent part and the counterfeit preventing structure according to any one of Claims 1 to 6 disposed on the transparent part of the article.

9. The counterfeit preventing article according to Claim 8, wherein the article including the transparent part is selected from the group consisting of a personal authentication medium, securities, and a counterfeit preventing medium for brand protection.

10. The counterfeit preventing article according to Claim 9, wherein the personal authentication medium includes a description of personal information or stores electronical data of personal information, and is selected from the group consisting of a card, a passport, and a mobile phone.

11. The counterfeit preventing article according to Claim 9, wherein the securities are selected from the group consisting of a bill and a bank note.
